# EUROPEAN PATENT SPECIFICATION

(11) **EP 0 413 399 B1**
(45) Date of publication and mention of the grant of the patent: **14.12.1994**
(21) Application number: 90202208.6
(22) Date of filing: 16.08.1990
(51) Int. Cl.: B65G 17/04

(54) **Bulk conveyor**
Schüttgutförderer
convoyeur pour matériaux en vrac

(30) Priority: 17.08.1989 NL 8902082
(43) Date of publication of application: 20.02.1991
(73) Proprietor: Zijlstra & Bolhuis B.V., NL-9645 LA Veendam (NL)
(72) Inventor: Pastoor, Hendrik, NL-9641 JK Veendam (NL); Middel, Jan, NL-9468 HL Annen (NL)
(74) Representative: Smulders, Theodorus A.H.J., Ir.

(56) References cited:
- DE-C- 860 921
- FR-A- 1 326 839
- FR-A- 2 018 198
- FR-A- 2 192 049
- US-A- 1 914 708
- US-A- 2 244 827
- US-A- 2 309 155
- US-A- 3 502 198

## Description

The invention relates to a bulk hopper device for agricultural products, in particular suitable for seed potatoes, comprising an endless conveyor bottom passed around return members, said conveyor bottom including spaced cross elements and forming a stepped product raising path defined by side walls on opposite sides, and a cloth arranged on the cross elements to form the transporting surface of the conveyor, said cloth sagging somewhat between the cross elements.

Such a conveyor bottom is known from French patent no. 1,326,839. A disadvantage of the known conveyor bottom is that the top faces of its cross elements have been provided with relatively thin terminal ends. As a consequence, the agricultural products, which may sometimes be very vulnerable, such as freshly harvested seed potatoes, may become damaged if they come into contact with those cross elements, which is undesirable.

The invention has for its object to overcome the disadvantage outlined, and more specifically to provide an efficient bulk hopper for agricultural products, which at least substantially reduces the chance of damage to the products in the bulk hopper.

For this purpose, according to the invention, a bulk hopper of the kind described is characterized in that soft material is provided at least over a part of each cross element facing the transporting surface and the cross elements are each provided with a cavity extending in the longitudinal direction of the cross elements, which cavity is in communication with the surroundings through a slot also extending in the longitudinal direction, with the cloth extending through the slots into the cavities.In the following, an exemplary embodiment of the invention will be described in more detail with reference to the accompanying drawing.
Fig. 1 shows schematically in side-elevational view, an example of a bulk hopper for agricultural products;
Figs. 2-4 illustrate variants of the invention.

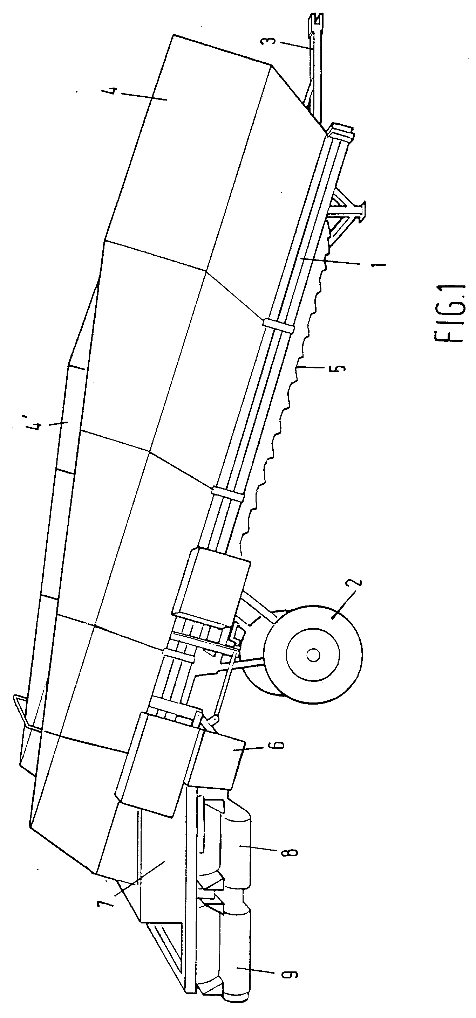

The bulk hopper shown schematically in side-elevational view in Fig. 1 comprises a frame which is portable owing to the provision of wheels 2 and a draw bar 3. The bulk hopper itself is formed by upright panels 4,4', between which is an endless conveyor bottom, the lower return run is designated by 5. The conveyor bottom is driven by a driving device 6, which in this example is disposed adjacent the top end of the product raising path. Disposed beyond the top end of the product raising path, in this example, there is further disposed a roller sieve unit, indicated schematically at 7. Disposed below the roller sieve unit, there is further provided a cross conveyor 8 for removing the material passed by the roller sieve unit. The rollers of the roller sieve unit are so driven, in operation, that the agricultural products are transported by the rollers to a second cross conveyor 9, which can transport the products further.

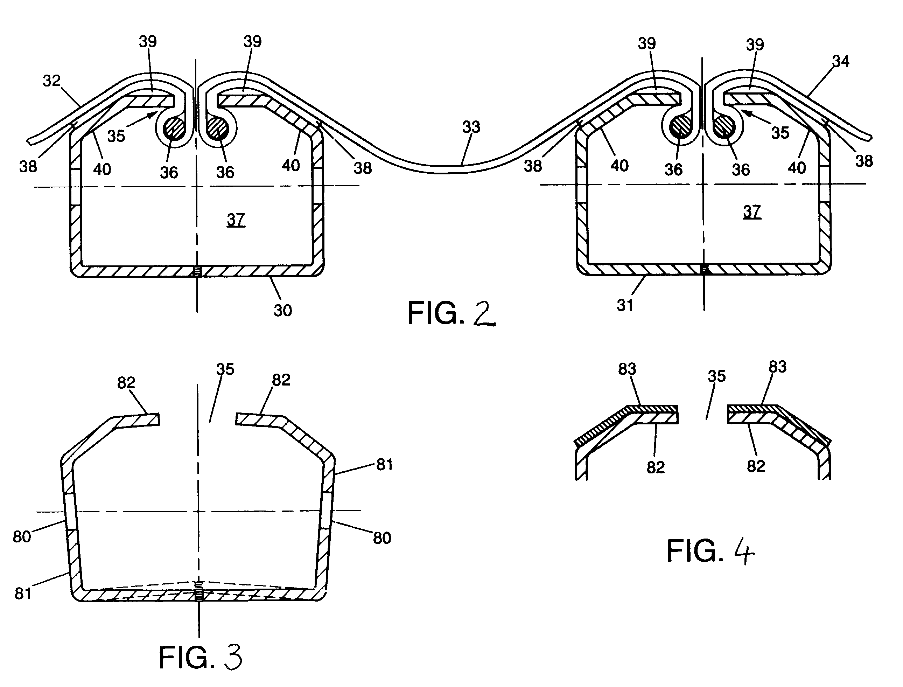

Fig. 2 shows schematically a portion of a particularly suitable embodiment of a bottom for a bulk hopper according to the invention (soft material over the crosselements not shown!). The bulk hopper bottom shown consists of a plurality of cross elements, two of which are shown at 30 and 31 in Fig. 2. Provided between each pair of cross elements are strips of cloth 32,33,34, extending transversely to the direction of transport, so that, as it were, the bulk hopper bottom is here formed from lamellas. An advantage of the use of lamellas is that, in the case of a local damage, it is only the damaged lamellas and not the entire bulk hopper bottom that need be replaced.

The cross elements 30,31 have a cavity extending lengthwise of the cross elements, that is to say, in the transverse direction of the bulk hopper, which cavity communicates with the surroundings at the top of the cross elements through a narrowed slot. Advantageously, the cross elements may consist of a hollow section of a suitable material provided at the top with a longitudinally extending slot. The slot or slit, designated at 35 in Fig. 2 is so narrow that the edges of successive strips of cloth extending through the slot into the hollow section fully fill up the slot.

In the example shown, each longitudinal edge of a cloth strip or lamella 32,33,34, is turned back about an elongated element 36. A suitable elongated element is a rod, or a wire or thread or a tendon, or the like. At the elongated elements, a thickening is formed, which in the operative condition is within cavity 37 of the cross elements. The thickness of material at the elongated element is so large that the elongated elements cannot be pulled outwards through the slot.

The lamellas can be mounted by slipping the thickened marginal portion of the cloth strips into the cross elements from one of the ends of the cross elements. If desired, use can be made of somewhat resilient cross elements, as shown in Fig. 3, the slot 35 of which can be narrowed after the cloth strips have been inserted, by means, for example, of draw bolts which can be inserted through holes 80 in the side walls 81 and draw the side walls and hence also the edges 82 of slot 35 towards one another.

The marginal strips 38 of the cloth strips, turned back about the elongated elements are preferably disposed under the cloth strips themselves, as shown in Fig. 2, and are secured to the cloth strips, for example, by gluing or sewing. At the position of the turned-back marginal strips, the cloth strips have a double thickness, which promotes the formation of air pockets 39 just next to the slot 35. These air pockets form an extra buffer between the hard cross elements and the bulk hopper bottom at these points. Strips of soft material are further provided on the top of the cross elements, as indicated by way of example at 83 in Fig. 4. If desired, the soft material may continue into slot 35.

It is further possible for an elongated element to be secured to the edges of the cloth, so that the thickening is exclusively formed by the elongated element, and no zone of double thickness of the cloth material is formed. In that case, too, an air pocket may be formed, which then has a less stiff wall at the top. At some distance from the edges provided with an elongate element, the cloth may be provided at the bottom with strips of soft material which, in the mounted state, are lying between the cloth and the top of the cross elements. A similar technique may be used in the situation shown in Fig. 2. Also, whether or not in combination with strips of soft material on the cloth, soft material is provided on the cross elements, as shown in Fig. 4.

Preferably, the cross elements have bevelled top edges, such as indicated at 40. The cloth strip provided between two cross elements, which sags slightly between the cross elements, is thus supported throughout a relatively large surface area, which results in reduced wear and tear. In the example shown, the bevelled edges are flat, but they could alternatively be slightly convex, for example.

It is noted that, in view of the above, various modification will readily occur to those skilled in the art. Thus materials other than those mentioned may be used. The cloth 12, for example, may be rubber cloth or canvas or pvc cloth, or be built up of layers of different materials. Such and similar modifications are considered to fall within the scope of the invention. The essential point for the invention is that a product-friendly surface is provided throughout the entire width and length of the conveyor bottom, also at the cross elements.

## Claims

1. A bulk hopper device for agricultural products, in particular suitable for seed potatoes, comprising an endless conveyor bottom passed around return members, said conveyor bottom including spaced cross elements(11;30,31) and forming a stepped product raising path defined by side walls (4,41) on opposite sides, and a cloth (12;32,33,34) arranged on the cross elements (11;30,31) to form the transporting surface of the conveyor, said cloth (12;32,33,34) sagging somewhat between the cross elements, characterized in that soft material (83) is provided at least over the part of each cross element facing the transporting surface and the cross elements (11;30,31) are each provided with a cavity (37) extending in the longitudinal direction of the cross elements, which cavity (37) is in communication with the surroundings through a slot (35) also extending in the longitudinal direction, with the cloth extending through the slots into the cavities where it is fixed against movement in the direction of transportation.

2. A bulk hopper device according to claim 1, characterized in that the cross elements (30,31) each consist of a hollow section which is provided with a slot (35) at the top, as viewed in the operative state.

3. A bulk hopper device according to claim 2, characterized in that the hollow section has a substantially flat top wall in which the slot (35) is provided.

4. A bulk hopper device according to claim 3, characterized in that said top wall connects through bevelled parts (40) with the side walls (81) of said section (30,31).

5. A bulk hopper device according to any preceding claim, characterized in that means (36) have been provided for attaching the cloth to the cross elements (11,30,31).

6. A bulk hopper device according to claim 5, characterized in that folds are formed in the cloth, such folds extending within the cavity.

7. A bulk hopper device according to claim 5 or 6, characterized in that elongated elements (36) have been provided within the cavity (37) of the cross elements (11,30,31), whereby cloth material (14,32,33,34) is located between the elongated elements (36) and the cross elements (11,30,31).

8. A bulk hopper device according to claim 6 or 7, characterized in that an elongated element (36) has been placed within each of said folds.

9. A bulk hopper device according to any preceding claim, characterized in that the slots (35) have been narrowed after the cloth (32,33,34) has been inserted into the cavity (37).

10. A bulk hopper device according to claim 9, characterized in that draw bolts have been inserted through holes (80) in side walls (81) of cross elements (11,30,31) for drawing the edges (82) of the slots (35) towards one another.

11. A bulk hopper device according to any preceding claim, characterized in that a strip-shaped cloth (32,33,34) is provided between each pair of cross elements (30,31), which cloth is provided with an elongated thickening adjacent to the longitudinal edges extending lengthwise of the cross elements, which elongated thickenings are disposed within the cavities (37) of the associated cross elements (30,31) in the mounted condition.

12. A bulk hopper device according to claim 11, characterized in that the thickenings are formed by elongated elements (36) secured to the cloth (32,33,34).

13. A bulk hopper device according to claim 12, characterized in that, adjacent to each longitudinal edge of a strip-shaped cloth (32,33,34), a marginal strip (38) of the cloth is turned back about an elongated element (36) extending parallel to the longitudinal edge.

14. A bulk hopper device according to claim 13, characterized in that an elongated element (36) is secured to each longitudinal edge of a strip-shaped cloth (32,33,34).

15. A bulk hopper device according to any preceding claim, characterized in that an air pocket (39) is formed on opposite sides of the slot (35) between the cloth and at least a portion of the surface of said cross element.

## Patentansprüche

1. Schüttgutbunker für Landwirtschaftsprodukte, insbesondere für Saatkartoffein, mit einem um Umlenkorgane gelegten endlosen Förderer, der im Abstand voneinander angeordnete Querelemente (11;30,31) aufweist und eine gestufte, die Produkte hinaufführende Bahn bildet, die an gegenüberliegenden Seiten durch Seitenwände (4,41) begrenzt ist, und mit einem an den Querelementen (11;30,31) angeordneten, die Förderfläche des Förderers bildenden Tuch (12;32,33,34), das zwischen den Querelementen einigermaßen durchhängt, dadurch gekennzeichnet, daß weiches Material (83) über mindestens den der Förderfläche zugekehrten Teil jedes Querelements vorgesehen ist und die Querelemente (11;30,31) je einen sich in Längsrichtung der Querelemente erstreckenden Hohlraum (37) aufweisen, der durch einen sich ebenfalls in Längsrichtung erstreckenden Schlitz (35) in Verbindung mit der Umgebung steht, wobei das Tuch sich durch die Schlitze bis in die Hohlräume erstreckt, in denen es gegen Bewegung in der Förderrichtung gesichert ist.

2. Schüttgutbunker nach Anspruch 1, dadurch gekennzeichnet, daß die Querelemente (30,31) je aus einem Hohlprofil bestehen, das, im Betriebszustand gesehen, oben mit einem Schlitz (35) versehen ist.

3. Schüttgutbunker nach Anspruch 2, dadurch gekennzeichnet, daß das Hohlprofil eine im wesentlichen flache Oberwand aufweist, in der der Schlitz (35) vorgesehen ist.

4. Schüttgutbunker nach Anspruch 3, dadurch gekennzeichnet, daß die Oberwand durch abgeschrägte Teile (40) an die Seitenwände (81) des Profils (30,31) anschließt.

5. Schüttgutbunker nach einem der vorhergehenden Ansprüche, dadurch gekennzeichnet, daß Mittel (36) zum Befestigen des Tuches an den Querelementen (11,30,31) vorgesehen sind.

6. Schüttgutbunker nach Anspruch 5, dadurch gekennzeichnet, daß in dem Tuch Falten gebildet sind, die sich im Hohlraum erstrecken.

7. Schüttgutbunker nach Anspruch 5 oder 6, dadurch gekennzeichnet, daß längliche Elemente (36) im Hohlraum (37) der Querelemente (11,30,31) vorgesehen sind, wobei Tuchmaterial (14,32,33,34) sich zwischen den länglichen Elementen (36) und den Querelementen (11,30,31) befindet.

8. Schüttgutbunker nach Anspruch 6 oder 7, dadurch gekennzeichnet, daß ein längliches Element (36) in jeder dieser Falten angebracht ist.

9. Schüttgutbunker nach einem der vorhergehenden Ansprüche, dadurch gekennzeichnet, daß die Schlitze (35) verengt sind, nachdem das Tuch (32,33,34) in den Hohlraum (37) eingebracht ist.

10. Schüttgutbunker nach Anspruch 9, dadurch gekennzeichnet, daß Zugbolzen durch Öffnungen (80) in den Seitenwänden (81) der Querelemente (11,30,31) gesteckt sind, um die Ränder (82) der Schlitze (35) gegeneinander zu ziehen.

11. Schüttgutbunker nach einem der vorhergehenden Ansprüche, dadurch gekennzeichnet, daß zwischen jeweils zwei Querelementen (30,31) ein streifenförmiges Tuch (32,33,34) angeordnet ist, das nahe den sich längs der Querelemente erstreckenden Längsrändern mit einer länglichen Verdickung versehen ist, welche länglichen Verdickungen in montiertem Zustand in den Hohlräumen (37) der zugeordneten Querelemente (30,31) angebracht sind.

12. Schüttgutbunker nach Anspruch 11, dadurch gekennzeichnet, daß die Verdickungen durch am Tuch (32,33,34) befestigte längliche Elemente (36) gebildet sind.

13. Schüttgutbunker nach Anspruch 12, dadurch gekennzeichnet, daß nahe jedem Längsrand eines streifenförmigen Tuches (32,33,34) ein Randstreifen (38) des Tuches um ein sich parallel zum Längsrand erstreckendes längliches Element (36) zurückgeschlagen ist.

14. Schüttgutbunker nach Anspruch 13, dadurch gekennzeichnet, daß ein längliches Element (36) an jedem Längsrand eines streifenförmigen Tuches (32,33,34) befestigt ist.

15. Schüttgutbunker nach einem der vorhergehenden Ansprüche, dadurch gekennzeichnet, daß an gegenüberliegenden Seiten des Schlitzes (35) zwischen dem Tuch und mindestens einem Teil der Oberfläche des Querelements eine Luftkammer (39) gebildet ist.

## Revendications

1. Un dispositif de trémie de chargement en vrac pour produits agricoles, convenant en particulier pour les pommes de terre d'ensemencement, comprenant à la base un transporteur sans fin passant sur des appareils de renvoi, le dit transporteur comportant des éléments transversaux espacés (11; 30, 31) et formant pour le produit un chemin d'élévation étagé défini par des parois latérales (4, 41) sur les côtés opposés, et un tapis (12; 32, 33, 34) disposé sur les éléments transversaux (11; 30, 31) de façon à former la surface de transport du transporteur, le dit tapis (12; 32, 33, 34) pendant quelque peu entre les éléments transversaux, caractérisé par le fait qu'une matière souple (83) est disposée au moins sur la partie de chaque élément transversal faisant face à la surface de transport, et que les éléments transversaux (11; 30, 31) sont chacun pourvus d'une cavité (37) s'étendant dans la direction longitudinale de l'élément transversal, laquelle cavité (37) est en communication avec son environnement par une fente (35) s'étendant également dans la direction longitudinale, avec le tapis s'étendant au travers des fentes dans les cavités, où il est fixé contre le mouvement dans la direction du transport.

2. Un dispositif de trémie de chargement en vrac selon la revendication 1, caractérisé par le fait que les éléments transversaux (30, 31) consistent chacun en une section creuse munie d'une fente (35) à la partie supérieure, telle que vue dans sa position de travail.

3. Un dispositif de trémie de chargement en vrac selon la revendication 2, caractérisé par le fait que la section creuse possède une paroi supérieure essentiellement plane dans laquelle la fente (35) est disposée.

4. Un dispositif de trémie de chargement en vrac selon la revendication 3, caractérisé par le fait que la dite paroi supérieure est raccordée par des parties biseautées (40) aux parois latérales (81) de la dite section (30, 31).

5. Un dispositif de trémie de chargement en vrac selon l'une quelconque des revendications précédentes, caractérisé par le fait que des moyens (36) ont été prévus pour attacher le dit tapis aux éléments transversaux (11, 30, 31).

6. Un dispositif de trémie de chargement en vrac selon la revendication 5, caractérisé par le fait que des plis sont prévus dans le tapis, ces plis s'étendant dans la cavité.

7. Un dispositif de trémie de chargement en vrac selon les revendication 5 ou 6, caractérisé par le fait que des éléments allongés (36) ont été prévus dans la cavité (37) des dits éléments transversaux (11, 30, 31), au moyen des quels le tapis (14, 32, 33, 34) est localisé entre les éléments allongés (36) et les éléments transversaux (11, 30, 31).

8. Un dispositif de trémie de chargement en vrac selon les revendications 6 ou 7, caractérisé par le fait qu'un élément allongé (36) a été placé dans chacun des dits plis.

9. Un dispositif de trémie de chargement en vrac selon l'une quelconque des revendications précédentes, caractérisé par le fait que les fentes (35) ont été rétrécies après que le tapis (32, 33, 34) ait été inséré dans la cavité (37).

10. Un dispositif de trémie de chargement en vrac selon la revendication 9, caractérisé par le fait que des boulons ont été insérés dans des trous (80) dans les parois latérales (81) des éléments transversaux (11, 30, 31) pour rapprocher l'un de l'autre les bords (82) des fentes (35).

11. Un dispositif de trémie de chargement en vrac selon l'une quelconque des revendications précédentes, caractérisé par le fait qu'un tapis en forme de bande (32, 33, 34) est disposé entre chaque paire d'éléments transversaux (30, 31), ce tapis étant pourvu d'une surépaisseur allongée adjacente aux bords longitudinaux s'étendant sur la longueur des éléments transversaux, lesquelles surépaisseurs allongées sont disposées dans les cavités (37) des éléments transversaux associés (30, 31) dans la position de travail.

12. Un dispositif de trémie de chargement en vrac selon la revendication 11, caractérisé par le fait que les surépaisseurs sont formées par des éléments allongés (36) attachés au tapis (32, 33, 34).

13. Un dispositif de trémie de chargement en vrac selon la revendication 12, caractérisé par le fait que, adjacent à chaque bord longitudinal d'un tapis en forme de bande (32, 33, 34), une bande marginale (38) du tapis est retournée autour d'un élément allongé (36) s'étendant parallèlement au bord longitudinal.

14. Un dispositif de trémie de chargement en vrac selon la revendication 13, caractérisé par le fait qu'un élément allongé (36) est attaché à chaque bord longitudinal d'un tapis en forme de bande (32, 33, 34).

15. Un dispositif de trémie de chargement en vrac selon l'une quelconque des revendications précédentes, caractérisé par le fait qu'une poche d'air (39) est formée aux côtés opposés de la fente (35) entre le tapis et au moins une portion de la surface du dit élément transversal.
